# EUROPÄISCHE PATENTSCHRIFT

(11) **EP 2 513 441 B1**
(45) Veröffentlichungstag und Bekanntmachung des Hinweises auf die Patenterteilung: **16.10.2013**
(21) Anmeldenummer: 10787359.8
(22) Anmeldetag: 26.11.2010
(51) Int. Cl.: F01N 3/22, F16K 31/06

(54) **VENTILVORRICHTUNG FÜR VERBRENNUNGSKRAFTMASCHINEN**
VALVE ARRANGEMENT FOR COMBUSTION ENGINE
DISPOSITIF DE SOUPAPE POUR MOTEUR A COMBUSTION

(30) Priorität: 17.12.2009 DE 102009058930
(43) Veröffentlichungstag der Anmeldung: 24.10.2012
(73) Patentinhaber: Pierburg GmbH, 41460 Neuss (DE)
(72) Erfinder: HERRMANN, Berthold, 41462 Neuss (DE); PAFFRATH, Holger, Dr., 50259 Pulheim (DE); BURGFELS, Peter, 41363 Jüchen (DE)
(74) Vertreter: Patentanwälte ter Smitten Eberlein Rütten Partnerschaftsgesellschaft
(86) Internationale Anmeldenummer: PCT/EP2010/068303
(87) Internationale Veröffentlichungsnummer: WO 2011/082887

(56) Entgegenhaltungen:
- DE-A1- 19 752 977
- DE-A1-102007 000 900
- US-A1- 2005 204 732

## Beschreibung

Die Erfindung betrifft eine Ventilvorrichtung für Verbrennungskraftmaschinen mit einer Antriebseinheit, einem Antriebsgehäuse, in dem die Antriebseinheit angeordnet ist, einer über die Antriebseinheit bewegbaren Ventileinheit, die zumindest aus einer Ventilstange und einem Ventilschließkörper besteht, einem Strömungsgehäuse, welches einen Fluideinlasskanal und einen Fluidauslasskanal aufweist, deren Verbindungsquerschnitt über den Ventilschließkörper regelbar ist, einem Druckerfassungsraum, der mit dem Fluideinlasskanal fluidisch verbunden ist und einem Drucksensor, der im Druckerfassungsraum angeordnet ist.

Derartige Ventilvorrichtungen sind beispielsweise aus dem Bereich der Sekundärluftzuführung zur Regelung der in den Abgasstrang eingebrachten Sekundärfuftmenge bekannt, wodurch die Schadstoffemissionen in den Abgasen des Verbrennungsmotors durch Oxidation unverbrannter Kohlenwasserstoffe verringert werden können. Diese Ventile weisen ein häufig elektromagnetisch betätigtes Ventil auf, über welches die Regelung der Luftmenge vorgenommen wird sowie ein Rückschlagventil auf, mittels dessen eine Strömung von Abgas in umgekehrter Richtung zur Sekundärluftpumpe aufgrund von Abgaspulsationen verhindert wird. Um Fehlfunktionen der Sekundärluftpumpe zu erkennen oder um die Zusatzluftzufuhr zu steuern, ist es bekannt, im zur Ventilvorrichtung führenden Kanal einen Drucksensor anzuordnen. Dieser benötigt jedoch zusätzliche elektrische Anschlüsse und zusätzlichen Bauraum.

Zur Lösung dieses Problems wird in der DE 10 2005 011 884 A1 eine Ventilvorrichtung für ein Zusatzluftzufuhrsystem offenbart, bei dem eine Sekundärluftpumpe stromaufwärts eines Katalysators Zusatzluft in ein Abgasrohr führt, um die Aufheizung und Aktivierung des Katalysators zu beschleunigen. Dabei ist zwischen der Sekundärluftpumpe und dem Abgasrohr eine Ventilvorrichtung vorgesehen, die einen Fluideinlasskanal und einen Fluidauslasskanal, der mit dem Abgasrohr verbunden ist, aufweist, wobei die vom Fluideinlasskanal zum Fluidauslasskanal strömende Luftmenge von der Stellung des Ventils abhängig ist. Zur Bauraumreduzierung ist der Drucksensor bei dieser Ausführung oberhalb des Elektromagneten des Ventils angeordnet. Die Verbindung des Druckerfassungsraumes, in dem der Drucksensor angeordnet ist, mit dem Fluideinlasskanal erfolgt über schmale Spalte entlang der Spule des Elektromagneten. Die zur Verfügung stehenden Querschnitte sind hier jedoch sehr gering, so dass die Messergebnisse die Wirklichkeit erst verzögert wiederspiegeln. Hinzu entstehen Druckverluste aufgrund der geringen Querschnitte, so dass insgesamt ungenaue Messungen die Folge sind.

Um möglichst genaue Messergebnisse zeitnah zu erhalten, wird in der DE 10 2007 000 900 A1 vorgeschlagen, am Fluideinlasskanal Öffnungen vorzusehen, die mit einer Druckmesskammer verbunden sind, in der ein Drucksensor angeordnet ist. Die Luft strömt bei dieser Anordnung auf den Drucksensor zu, das heißt, die Druckerfassungsfläche liegt dem Kanal direkt gegenüber. Hierdurch sollen sehr genaue Druckmessungen ermöglicht werden, wobei die Druckerfassungsgenauigkeit auch dann aufrecht erhalten wird, wenn eine sogenannte Stoß- bzw. Schockwelle im Fluideingang auftreten sollte. Diese Art der Anordnung weist jedoch den Nachteil auf, dass insbesondere der Fluideingang erneut einen erheblichen Bauraum beansprucht, da jeweils der zusätzliche Druckerfassungsraum mit zugehörigem Drucksensor vorzusehen ist. Auch ist die Variabilität eines derartigen Ventils hinsichtlich der Anpassung an verschiedene Bauräume insbesondere bezüglich einer Anpassung der Steckerlage stark eingeschränkt. Zur Steuerung des Ventils können kurze Druckpulsationen zu Fehlregelungen des Ventils führen.

Es ist daher Aufgabe der Erfindung, eine Ventilvorrichtung zu schaffen, die ausreichend genaue Messergebnisse liefert, die jedoch gegen kurze auftretende Druckpulsationen und Kondensat im Abgasstrom unempfindlich ist und gleichzeitig einen möglichst geringen Bauraum benötigt. Bezüglich der elektrischen Anbindung soll eine möglichst große Variabilität bestehen.

Diese Aufgabe wird dadurch gelöst, dass der Drucksensor im Antriebsgehäuse, integriert ist und eine Druckerfassungsfläche aufweist, die in einer Ebene angeordnet ist, deren Normale senkrecht zur Strömungsrichtung des Fluids in den Druckerfassungsraum angeordnet ist. Eine derartig ausgeführte Ventilvorrichtung weist den Vorteil auf, dass zur Anordnung des Drucksensors beinahe kein zusätzlicher Bauraum benötigt wird, wobei der Strömungsweg zum Druckerfassungsraum so kurz gewählt werden kann, dass genaue Messergebnisse vorliegen. Dennoch wird vermieden, dass ein Druckstoß in Richtung der Druckerfassungsfläche zu einer Verfälschung dieser Messergebnisse führt. Der Ort zur Anbringung des Druckerfassungsraums mit dem Drucksensor am Umfang des Ventils ist weitestgehend frei wählbar, so dass auch die Lage des zugehörigen Steckers an vorhandene Anschlüsse und den vorhandenen Bauraum angepasst werden kann. Aufgrund der folgenden Parallelität zwischen Sensorfläche und Luftstrom wird ein Absetzen von Kondensat auf dem Drucksensor vermieden.

Vorzugsweise erstreckt sich der Druckerfassungsraum in Richtung der Normalen auf die Druckerfassungsfläche des Drucksensors von der Druckerfassungsfläche zumindest 4 mm. So können Druckspitzen, welche in Richtung der Druckerfassungsfläche wirken, abgedämpft werden, so dass daraus resultierende Fehlmessungen minimiert werden.

Eine weitgehende Unempfindlichkeit gegen vorhandenes Kondensat ergibt sich, wenn die Druckerfassungsfläche des Drucksensors über den Umfang von einer Schwallmauer umgeben ist.

Eine besonders einfache Anpassung und Austauschbarkeit bei Fehlfunktion der Antriebseinheit wird dadurch erzielt, dass das Antriebsgehäuse eine Flanschfläche zur Befestigung des Strömungsgehäuses aufweist, welche senkrecht zur Bewegungsrichtung des Ventils angeordnet ist.

Vorzugsweise ist der Druckerfassungsraum mit dem Fluideinlasskanal über einen Verbindungskanal verbunden, welcher in einer weitergehenden Ausführung senkrecht zur Flanschfläche des Antriebsgehäuses angeordnet ist. So wird eine kürzeste Verbindung zum Fluideinlasskanal hergestellt. Der Aufbau ist durch die mögliche Integration des Verbindungskanals in das Antriebsgehäuse einfach und kostengünstig herstellbar. Ein Abstand zum Fluideinlasskanal zum Ausgleich von Druckspitzen bleibt vorhanden.

In einer hierzu weiterführenden Ausführung weisen der Druckerfassungsraum und der Verbindungskanal ein Gesamtvolumen von zumindest 15 mm³ auf. Kurzfristige Druckschwankungen können so ausgeglichen werden, ohne dass diese als tatsächliche Druckänderungen des Systems vom Drucksensor registriert werden.

In einer besonders vorteilhaften Ausgestaltung der Erfindung ist im Antriebsgehäuse ein Stanzgitter eingespritzt, über welches der Drucksensor und ein Elektromagnet der Antriebseinheit mit dem Stecker elektrisch verbunden sind. So werden zusätzliche Leitungen eingespart. Ein Lösen der elektrischen Kontakte wird durch die feste Lage innerhalb des Kunststoffes verhindert. Das Stanzgitter kann auch direkt die Anschlusspins im Stecker beinhalten.

Vorzugsweise ist der Druckerfassungsraum über einen Deckel verschlossen, der am Antriebsgehäuse befestigt ist. So kann der Drucksensor ohne Ausbau der gesamten Antriebseinheit in seiner Funktion überprüft und gegebenenfalls ausgetauscht werden. Des Weiteren wird der Zusammenbau vereinfacht.

Somit wird eine Ventilvorrichtung geschaffen, die lediglich einen geringen Bauraum bei hoher Messgenauigkeit ohne Zeitverzug aufweist. In Strömungsrichtung gerichtete Druckspitzen verfälschen die Messergebnisse nicht. Eine Ablagerung von Kondensat auf der Druckerfassungsfläche wird weitestgehend vermieden.

Ein Ausführungsbeispiel der Erfindung ist in den Zeichnungen dargestellt und wird nachfolgend beschrieben.

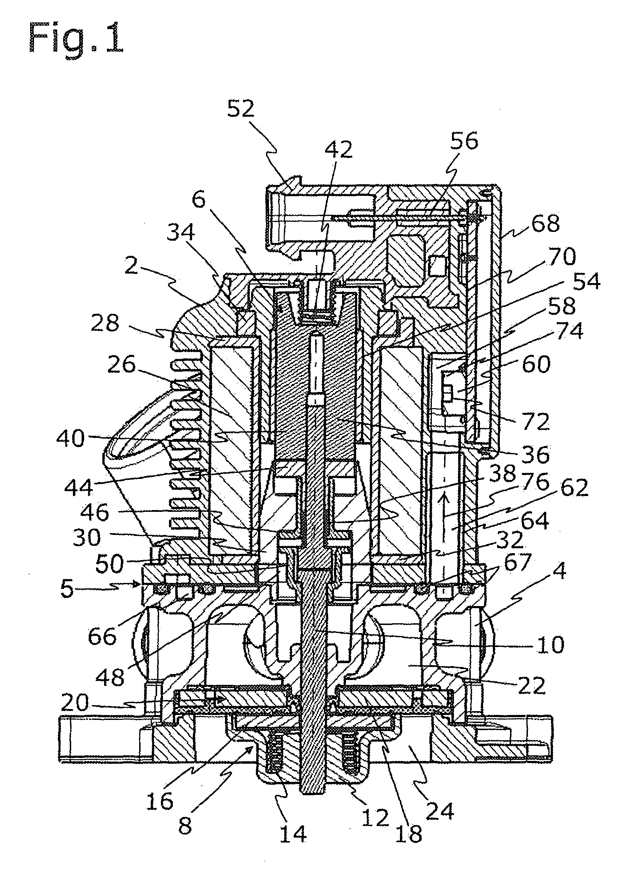

Figur 1 zeigt eine Seitenansicht einer erfindungsgemäßen Ventilvorrichtung in geschnittener Darstellung.

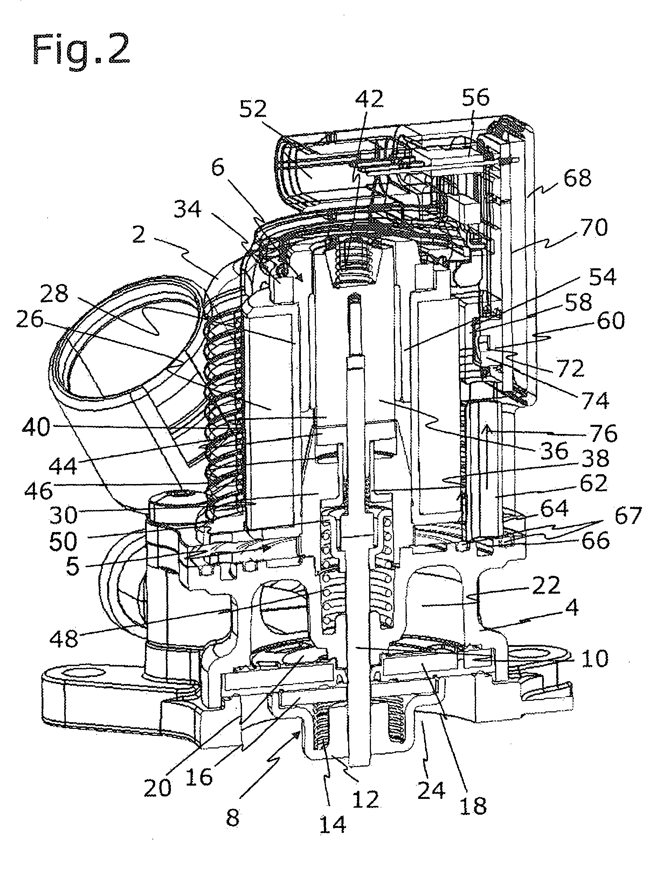

Figur 2 zeigt eine dreidimensionale Ansicht der Ventilvorrichtung aus Figur 1 mit teilweise aufgeschnittener und transparenter Darstellung.

Die in den Figuren dargestellte erfindungsgemäße Ventilvorrichtung dient beispielsweise als Sekundärtuftventil einer Verbrennungskraftmaschine. Das Sekundärluftventil besteht aus einem Antriebsgehäuse 2 und einem Strömungsgehäuse 4, die jeweils mehrteilig ausgeführt sein können und über eine gemeinsame Flanschfläche 5 aneinander befestigt sind.

Das Antriebsgehäuse 2 weist eine elektromagnetische Antriebseinheit 6 auf, mittels derer eine Ventileinheit 8 axial bewegbar ist. Die Ventileinheit 8 besteht aus einer zweiteilig ausgeführten Ventilstange 10, auf der am von der Antriebseinheit 6 abgewandten Ende ein erster Ventilschließkörper 12 befestigt ist. Der Ventilschließkörper 12 ist als Hohlkörper ausgebildet, in dem eine Feder 14 angeordnet ist, deren erstes axiales Ende gegen die verschlossene Seite des Ventilschließkörpers 12 anliegt und deren entgegengesetztes axiales Ende gegen eine Rückschlagplatte 16 anliegt, welche durch die Kraft der Feder 14 in Richtung einer Ventilsitzplatte 18 belastet wird, die als Sitzfläche für die Rückschlagplatte 16 dient. Die Ventilsitzplatte 18 dient zusätzlich als Sitzfläche für den den Umfang der Rückschlagplatte 16 im geschlossenen Zustand vollständig umgebenden Ventilschließkörper 12. Entsprechend weist die Ventilsitzplatte 18 als Verbindungsquerschnitt 20 dienende Öffnungen auf, über die ein Fluideinlasskanal 22 mit einem Fluidauslasskanal 24 verbunden werden kann, welche im Strömungsgehäuse 4 ausgebildet sind.

Die elektromagnetische Antriebseinheit 6 besteht aus einer Spule 26, die auf einem Spulenträger 28 gewickelt ist, einem Kern 30, der im Spulenträger 28 befestigt ist, einem Rückschlussblech 32 sowie einem Joch 34. Diese Anordnung wirkt mit einem mehrteiligen Anker 36 zusammen, der sich wiederum mittels einer Feder 38 an der Ventilstange 10 abstützt und in einer Gleitbuchse 54 verschieblich gelagert ist. Der mehrteilige Anker 36 besteht aus einem ersten Ankerelement 40, das mittels einer zweiten Feder 42, die sich am Antriebsgehäuse 2 am zum Ventilschließkörper 12 entgegengesetzten Ende abstützt und in Richtung des Ventilschließkörpers 12 vorgespannt ist, einem zweiten Ankerelement 44, dessen axiale Ausdehnung deutlich geringer ist als die des ersten Ankerelementes 40 und einem nicht magnetisierbaren ersten Kopplungsorgan 46, welches durch die Feder 38 gegen das zweite Ankerelement 44 belastet wird. Die Ventilstange 10 ist ihrerseits durch eine dritte Feder 48 und ein zweites Kopplungsorgan 50 in Richtung des Ankers 36 vorgespannt und in diesem gleitverschieblich geführt.

Des Weiteren weist das Antriebsgehäuse 2 einen Stecker 52 auf, der mit einer elektronischen Steuereinheit verbunden ist. Hierzu wird ein Stanzgitter 56 verwendet, über welches auch die Spule 26 angesteuert wird.

Im Antriebsgehäuse 2 ist erfindungsgemäß ein Druckerfassungsraum 58 ausgebildet, in dem ein Drucksensor 60 angeordnet ist, der ebenfalls über das Stanzgitter 56 mit dem Stecker 52 verbindbar ist. Der Druckerfassungsraum 58 ist über einen Verbindungskanal 62, der im vorliegenden Ausführungsbeispiel durch ein Rohr 64 begrenzt wird, fluidisch mit dem Fluideinlasskanal 22 verbunden. Wie den Figuren zu entnehmen ist, weist das Strömungsgehäuse 4 neben einer nicht näher dargestellten Öffnung zum Fluideinlasskanal 22 eine umlaufende Nut 66 an seiner Flanschfläche 5 auf, die es ermöglicht, das Strömungsgehäuse 4 variabel im Bezug auf das Antriebsgehäuse 2 anzuordnen und den Druckerfassungsraum 58 variabel zum Fluideinlasskanal 22 anzuordnen. Hierzu ist die Nut 66 im gleichen Abstand zur Mittelachse des Ventils wie das Rohr 64 angeordnet und das Rohr 64 beziehungsweise der Verbindungskanal 62 ragt ebenfalls bis zur Flanschfläche 5. Radial innerhalb und außerhalb ist jeweils ein Dichtring 67 angeordnet.

Der Druckerfassungsraum 58 ist in Verlängerung des zur Flanschfläche 5 senkrecht angeordneten Verbindungskanals 62 angeordnet und wird durch einen Deckel 68 verschlossen. Der Drucksensor 60 ist auf einer Platine 70 angeordnet, die die elektronische Steuereinheit 54 enthält. Der Drucksensor 60 weist eine Druckerfassungsfläche 72 auf, die von einer Schwallmauer 74 in Umfangsrichtung umgeben ist und deren Normale erfindungsgemäß senkrecht zur durch die Achse des Verbindungskanals 62 festgelegten Strömungsrichtung 76 des Fluids in den Druckerfassungsraum 58 angeordnet ist. Das Rohr 64 weist einen Durchmesser von etwa 4 mm auf. Dieser sollte mindestens 2 mm betragen. Der Abstand von der Druckerfassungsfläche 72 in Richtung der Normalen zur nächsten Wand beträgt etwa 5mm und sollte zumindest 4 mm betragen. Das Gesamtvolumen des Druckausgleichsraumes, der durch den Druckerfassungsraum 58 und den Verbindungskanal 62 gebildet wird, sollte zumindest 15 mm³ betragen, um Druckspitzen ausgleichen zu können.

Durch diese Anordnung wird sichergestellt, dass in den Druckerfassungsraum 58 einströmendes Fluid nicht direkt auf den Drucksensor 60 wirkt. Der Drucksensor 60 nimmt keine in Strömungsrichtung wirkende Druckpulsationen auf, sondern lediglich im Raum wirkende Druckänderungen. Zusätzlich wird er durch die Schwallmauer 74 vor einströmendem Kondensat geschützt.

Die erfindungsgemäße Ventilvorrichtung funktioniert nun wie fofgt:
Erfasst die ECU eine zu geringe Temperatur eines Katalysators, wird eine Sekundärluftpumpe eingeschaltet und das Sekundärluftventil angesteuert. Durch Stromzufuhr wird zunächst das zweite Ankerelement 44 mit dem ersten Kopplungsorgan 46 gegen die Feder 38 bewegt, wobei eine hohe Beschleunigung entsteht, durch die der Ventilschließkörpers 12 von der Ventilsitzplatte 18 auch bei vorhandener Verklebung gelöst wird. Der weitere Öffnungsvorgang wird durch das sich auch in Richtung des Ventilschließkörpers 12 bewegende erste Ankerelement 40 vollzogen. Der Druck der im Fluideinlasskanal 22 vorherrschenden Sekundärluft öffnet die Rückschlagplatte 16 gegen die Federkraft der Feder 14, so dass der Verbindungsquerschnitt 20 freigegeben wird und Sekundärluft zum Fluidauslasskanal 24 und von dort in ein folgendes Abgasrohr strömen kann. Die Rückschlagplatte 16 verhindert bei auftretenden Abgaspulsationen ein Zurückfließen des Abgases aus dem Abgasrohr in Richtung zur Sekundärluftpumpe.

Über den Verbindungskanal 62 liegt am Drucksensor 60 immer der im Fluideinlasskanal 22 herrschende Druck der Sekundärluft an und ermöglicht eine Überwachung der Sekundärluftzuführung, weiche von gerichteten Druckstößen unabhängig ist. Des Weiteren ist es möglich, eventuelle Fehlfunktionen der Sekundärluftpumpe durch den Drucksensor 60 erkennen zu lassen und diese Fehlfunktionen an eine angeschlossene ECU weiterzugeben.

Auf diese Weise wird eine zuverlässige Ansteuerung und Überprüfung (OBD) eines Sekundärluftventils sichergestellt, welche unempfindlich gegen Störungen durch gerichtete Druckstöße oder anfallendes Kondensat ist.

Es sollte deutlich sein, dass verschiedene konstruktive Änderungen des Sekündärluftventils denkbar sind, ohne den Schutzbereich des Hauptanspruchs zu verlassen.

## Patentansprüche

1. Ventilvorrichtung für Verbrennungskraftmaschinen mit einer Antriebseinheit
einem Antriebsgehäuse, in dem die Antriebseinheit angeordnet ist,
einer über die Antriebseinheit bewegbaren Ventileinheit, die zumindest aus einer Ventilstange und einem Ventilschließkörper besteht,
einem Strömungsgehäuse, welches einen Fluideinlasskanal und einen Fluidauslasskanal aufweist, deren Verbindungsquerschnitt über den Ventilschließkörper regelbar ist,
einem Druckerfassungsraum, der fluidisch mit dem Fiuideinlasskanal verbunden ist und
einem Drucksensor, der im Druckerfassungsraum angeordnet ist, **dadurch gekennzeichnet, dass**
der Drucksensor (60) im Antriebsgehäuse (2) integriert ist und eine Druckerfassungsfläche (72) aufweist, die in einer Ebene angeordnet ist, deren Normale senkrecht zur Strömungsrichtung des Fluids in den Druckerfassungsraum (58) angeordnet ist.

2. Ventilvorrichtung für Verbrennungskraftmaschinen nach Anspruch 1,
**dadurch gekennzeichnet, dass**
sich der Druckerfassungsraum (58) in Richtung der Normalen auf die Druckerfassungsfläche (72) des Drucksensors (60) von der Druckerfassungsflache (72) zumindest 4 mm erstreckt.

3. Ventilvorrichtung für Verbrennungskraftmaschinen nach einem der Ansprüche 1 oder 2,
**dadurch gekennzeichnet, dass**
die Druckerfassungsfläche (72) des Drucksensors (60) über den Umfang von einer Schwallmauer (74) umgeben ist.

4. Ventilvorrichtung für Verbrennungskraftmaschinen nach einem der vorhergehenden Ansprüche,
**dadurch gekennzeichnet, dass**
das Antriebsgehäuse (2) eine Flanschfläche (5) zur Befestigung des Strömungsgehäuses (4) aufweist, welche senkrecht zur Bewegungsrichtung der Ventileinheit (8) angeordnet ist.

5. Ventilvorrichtung für Verbrennungskraftmaschinen nach einem der vorhergehenden Ansprüche,
**dadurch gekennzeichnet, dass**
der Druckerfassungsraum (58) mit dem Fluideinlasskanal (22) über einen Verbindungskanal (62) fluidisch verbunden ist.

6. Ventilvorrichtung für Verbrennungskraftmaschinen nach Anspruch 4 und 5, **dadurch gekennzeichnet, dass**
der Verbindungskanal (62) senkrecht zur Flanschfläche (5) des Antriebsgehäuses (2) angeordnet ist.

7. Ventilvorrichtung für Verbrennungskraftmaschinen nach einem der Ansprüche 5 oder 6, **dadurch gekennzeichnet, dass**
der Druckerfassungsraum (58) und der Verbindungskanal (62) ein Gesamtvolumen von zumindest 15 mm³ aufweisen.

8. Ventilvorrichtung für Verbrennungskraftmaschinen nach einem der vorhergehenden Ansprüche,
**dadurch gekennzeichnet, dass**
im Antriebsgehäuse (2) ein Stanzgitter (56) eingespritzt ist, über welches der Drucksensor (60) und eine Spule (26) der Antriebseinheit (6) mit einem Stecker (52) elektrisch verbunden sind.

9. Ventilvorrichtung für Verbrennungskraftmaschinen nach einem der vorhergehenden Ansprüche,
**dadurch gekennzeichnet, dass**
der Druckerfassungsraum (58) über einen Deckel (68) verschlossen ist, der am Antriebsgehäuse (2) befestigt ist.

## Claims

1. A valve device for internal combustion engines, comprising
a drive unit,
a drive housing in which the drive unit is arranged,
a valve unit movable by means of the drive unit, the valve unit comprising at least a valve rod and a valve closure member,
a flow housing comprising a fluid inlet channel and a fluid outlet channel, their connection cross section being controllable through the valve closure member,
a pressure detection chamber fluidically connected with the fluid inlet channel, and
a pressure sensor arranged in the pressure detection chamber,
**characterized in that**
the pressure sensor (60) is integrated in the drive housing (2) and comprises a pressure detection surface (72) arranged in a plane whose normal is arranged perpendicular to the direction of the fluid flow into the pressure detection chamber (58).

2. The valve device for internal combustion engines of claim 1,
**characterized in that**
the pressure detection chamber (58) extends for at least 4 mm from the pressure detection surface (72) in the direction of the normal to the pressure detection surface (72) of the pressure sensor (60).

3. The valve device for internal combustion engines of claim 1 or 2,
**characterized in that**
the pressure detection surface (72) of the pressure sensor (60) is surrounded along its circumference by a surge barrier (74).

4. The valve device for internal combustion engines of one of the preceding claims,
**characterized in that**
the drive housing (2) comprises a flange surface (5) for fastening the flow housing (4), the surface being arranged perpendicular to the direction of movement of the valve unit (8).

5. The valve device for internal combustion engines of one of the preceding claims,
**characterized in that**
the pressure detection chamber (58) is fluidically connected with the fluid inlet channel (22) through a connecting channel (62).

6. The valve device for internal combustion engines of claim 4 and 5,
**characterized in that**
the connecting channel (62) is arranged perpendicular to the flange surface (5) of the drive housing (2).

7. The valve device for internal combustion engines of claim 5 or 6,
**characterized in that**
the pressure detection chamber (58) and the connecting channel (62) have a total volume of at least 15 mm³.

8. The valve device for internal combustion engines of one of the preceding claims,
**characterized in that**
a lead frame (56) is injection molded in the drive housing (2), through which the pressure sensor (60) and a coil (26) of the drive unit (6) are electrically connected to a connector (52).

9. The valve device for internal combustion engines of one of the preceding claims,
**characterized in that**
the pressure detection chamber (58) is closed with a cover (68) fastened to the drive housing (2).

## Revendications

1. Dispositif de soupape pour moteur à combustion comprenant
une unité d'entrainement,
un boitier d'entrainement dans lequel est disposée ladite unité d'entrainement,
une unité de soupape mobile par l'intermédiaire de ladite unité d'entrainement, ladite unité de soupape étant composée au moins d'une tige de soupape et un corps obturateur de soupape,
un boitier d'écoulement comprenant un conduit d'admission de fluide et un conduit de sortie de fluide, dont la section de raccord est réglable par l'intermédiaire dudit corps obturateur de soupape,
une chambre de détection de pression liée de manière fluidique au conduit d'admission de fluide, et
un capteur de pression disposé dans ladite chambre de détection de pression,
**caractérisé en ce que**
ledit capteur de pression (60) est intégré dans ledit boitier d'entrainement (2) et comprend une surface de détection de pression (72) disposée dans un plan dont la normale est disposée perpendiculairement à la direction d'écoulement du fluide dans ladite chambre de détection de pression (58).

2. Dispositif de soupape pour moteur à combustion selon la revendication 1,
**caractérisé en ce que**
ladite chambre de détection de pression (58) s'étend pour au moins 4 mm de ladite surface de détection de pression (72) dans la direction de la normale à ladite surface de détection de pression (72) du capteur de pression (60).

3. Dispositif de soupape pour moteur à combustion selon l'une des revendications 1 ou 2,
**caractérisé en ce que**
ladite surface de détection de pression (72) du capteur de pression (60) est entourée selon sa périphérie par une barrière anti-flot (74).

4. Dispositif de soupape pour moteur à combustion selon l'une quelconque des revendications précédentes,
**caractérisé en ce que**
ledit boitier d'entrainement (2) comprend une surface de bride (5) pour l'attachement dudit boitier d'écoulement (4), ladite surface étant disposée perpendiculairement à la direction de déplacement de ladite unité de soupape (8).

5. Dispositif de soupape pour moteur à combustion selon l'une quelconque des revendications précédentes,
**caractérisé en ce que**
ladite chambre de détection de pression (58) est en communication fluidique avec ledit conduit d'admission de fluide (22) par l'intermédiaire d'un conduit de raccord (62).

6. Dispositif de soupape pour moteur à combustion selon les revendications 4 et 5,
**caractérisé en ce que**
ledit conduit de raccord (62) est disposé perpendiculairement à ladite surface de bride (5) dudit boitier d'entrainement (2).

7. Dispositif de soupape pour moteur à combustion selon les revendications 5 ou 6,
**caractérisé en ce que**
ladite chambre de détection de pression (58) et ledit conduit de raccord (62) présentent un volume total d'au moins 15 mm³.

8. Dispositif de soupape pour moteur à combustion selon l'une quelconque des revendications précédentes,
**caractérisé en ce qu'**
une grille découpée (56) est injectée dans ledit boitier d'entrainement (2), par laquelle ledit capteur de pression (60) et une bobine (26) de ladite unité d'entrainement (6) sont raccordés électriquement par l'intermédiaire d'un connecteur (52).

9. Dispositif de soupape pour moteur à combustion selon l'une quelconque des revendications précédentes,
**caractérisé en ce que**
ladite chambre de détection de pression (58) est fermée par un couvercle (68) fixé sur ledit boitier d'entrainement (2).
